# EUROPEAN PATENT APPLICATION

(11) **EP 4 671 311 A1**
(43) Date of publication of application: **31.12.2025**
(21) Application number: 23924260.5
(22) Date of filing: 26.12.2023
(51) Int. Cl.: C08G 77/52

(54) **FLUORENE SKELETON-CONTAINING POLYMER**

(30) Priority: 24.02.2023 JP 2023027505
(71) Applicant: SHIN-ETSU CHEMICAL CO., LTD., Tokyo 1000005 (JP)
(72) Inventor: OMORI Hiroto, Annaka-shi, Gunma 379-0224 (JP); HIRANO Yoshinori, Annaka-shi, Gunma 379-0224 (JP)
(74) Representative: Ter Meer Steinmeister & Partner
(86) International application number: PCT/JP2023/046715
(87) International publication number: WO 2024/176616

(57) **Abstract**

Provided is a polymer having a silphenylene skeleton, a polysiloxane skeleton and a fluorene skeleton in the main chain, and containing an acryloyl group or a methacryloyl group in the side chain.

## Description

### TECHNICAL FIELD

The present invention relates to a fluorene skeleton-containing polymer.

### BACKGROUND ART

It is known that a fluorene skeleton-containing polymer is excellent in heat resistance and electrical characteristics. An example of the polymer is a functional epoxy resin represented by the following formula (X) and disclosed in Patent Document 1. However, the epoxy resin has no flexible portion in the main chain, so that a crack may be generated when the epoxy resin is cured.

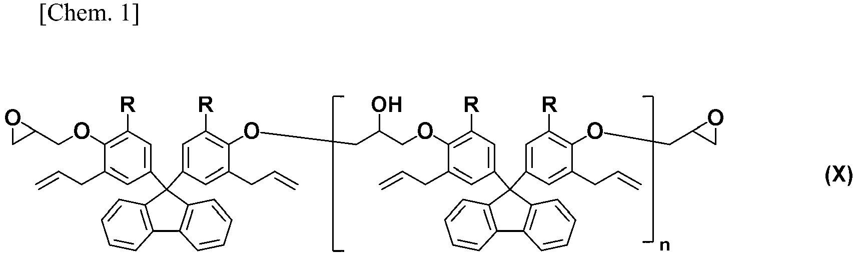

In contrast, a fluorene skeleton-containing resin, which is prepared by introducing a divalent hydrocarbon group or a polysiloxane structure as a flexible site, has been proposed (Patent Documents 2 and 3), and is known to exhibit good flexibility. Furthermore, a fluorene skeleton-containing resin, which is prepared by introducing a polysiloxane structure and a silphenylene structure, has been proposed (Patent Document 4), and is found to be excellent not only in flexibility but also in film characteristics and chemical resistance.

However, the introduction of a polysiloxane structure into a fluorene skeleton-containing resin is effective for improving flexibility and film characteristics, but a reduction in adhesion performance to a substrate was a problem. Because of this, it has been desired to develop a novel fluorene skeleton-containing resin that can maintain adhesion even if a polysiloxane structure is introduced.

### PRIOR ART DOCUMENTS

### PATENT DOCUMENTS

Patent Document 1: JP 4873223
Patent Document 2: JP-A 2014-47207
Patent Document 3: JP-A 2014-62055
Patent Document 4: JP-A 2008-184571

### SUMMARY OF INVENTION

### TECHNICAL PROBLEM

The present invention has been made in view of the above circumstances. An object of the present invention is to provide a novel fluorene skeleton-containing polymer providing a film having more excellent adhesion performance to a substrate than conventional fluorene skeleton-containing polymers, even if a polysiloxane structure is contained.

### SOLUTION TO PROBLEM

The present inventors have intensively conducted studies with a view to attaining the aforementioned object. As a result, they found that a polymer having a silphenylene skeleton, a polysiloxane skeleton, and a fluorene skeleton in the main chain and containing an acryloyl group or a methacryloyl group in a side chain provides a film more excellent in adhesion performance than conventional fluorene skeleton-containing polymers. Based on the finding, the present invention was accomplished.

More specifically, the present invention provides the following fluorene skeleton-containing polymers.
1. A polymer having a silphenylene skeleton, a polysiloxane skeleton, and a fluorene skeleton in the main chain, and containing an acryloyl group or a methacryloyl group in a side chain.
2. The polymer according to 1, which contains a repeat unit represented by the following formula (A1) and a repeat unit represented by the following formula (A2) and optionally contains a repeat unit represented by the following formula (A3) and a repeat unit represented by the following formula (A4): 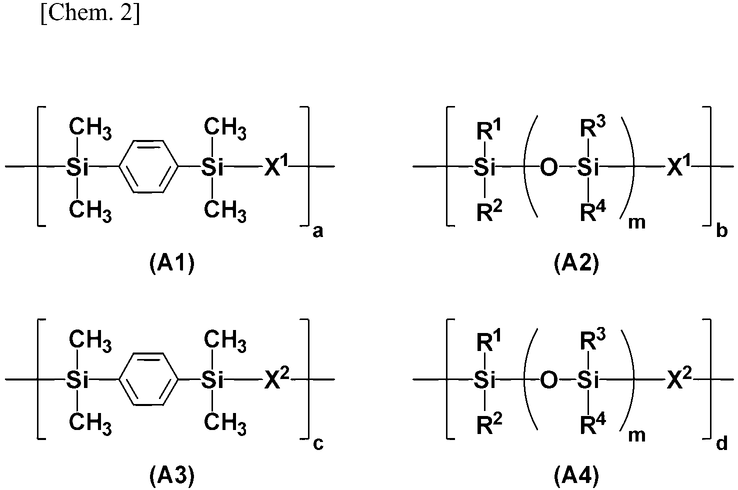 wherein R¹ to R⁴ are each independently a hydrocarbyl group having 1 to 20 carbon atoms and optionally containing a heteroatom; m is each independently an integer of 1 to 600; when m is an integer of 2 or more, R³s may be mutually the same or different, and R⁴s mutually the same or different; a, b, c, and d are numbers satisfying 0 < a < 1, 0 < b < 1, 0 ≤ c < 1, 0 ≤ d < 1, and a+b+c+d = 1; X¹ is a divalent group represented by the following formula (X1); and X² is a divalent group represented by the following formula (X2). 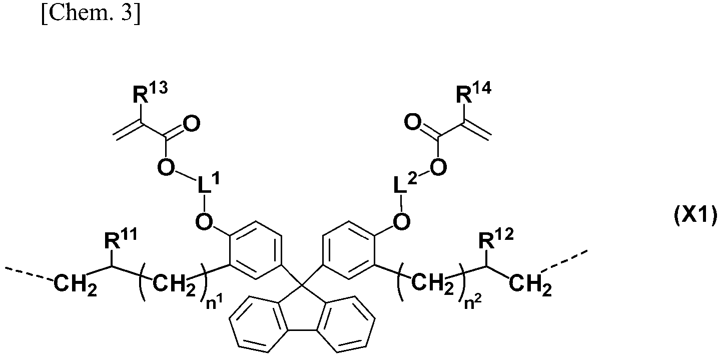 wherein n¹ and n² are each independently an integer of 1 to 7; R¹¹ to R¹⁴ are each independently a hydrogen atom or a methyl group; L¹ and L² are each independently a saturated hydrocarbylene group having 1 to 15 carbon atoms; a part of -CH₂- of the saturated hydrocarbylene group may be substituted with -O-, -S-, -SO₂-, -CO-, or -CONH-; some or all of the hydrogen atoms of the saturated hydrocarbylene group may be substituted with hydroxy groups; and the broken line represents a bond. 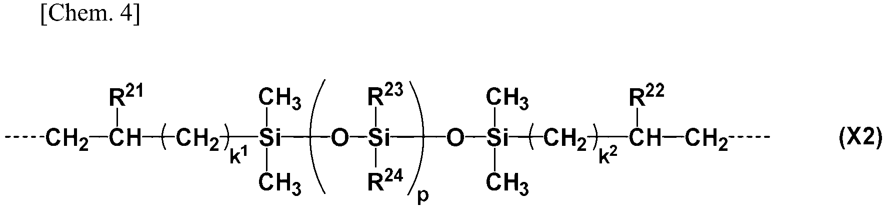 wherein R²¹ and R²² are each independently a hydrogen atom or a methyl group; R²³ and R²⁴ are each independently a hydrocarbyl group having 1 to 8 carbon atoms; k¹ and k² are each independently an integer of 0 to 7; p is an integer of 0 to 600; and the broken line represents a bond.
3. The polymer according to 2, wherein L¹ and L² are each a saturated hydrocarbylene group in which at least one hydrogen atom is substituted with a hydroxy group, or a saturated hydrocarbylene group in which at least one -CH₂- is substituted with -CONH-.
4. The polymer according to 2 or 3, wherein L¹ and L² each have 1 to 8 carbon atoms.
5. The polymer of any one of 2 to 4, wherein n¹ and n² are each 1.
6. The polymer of any one of 2 to 5, wherein R¹¹ and R¹² are each a hydrogen atom.
7. The polymer of any one of 2 to 6, wherein R²¹ and R²² are each a hydrogen atom.

### ADVANTAGEOUS EFFECTS OF INVENTION

The polymer of the present invention can provide a film more excellent in adhesion performance than conventional fluorene skeleton-containing polymers having a siloxane structure.

### DESCRIPTION OF EMBODIMENTS

### [Fluorene Skeleton-Containing Polymer]

The fluorene skeleton-containing polymer of the present invention is a polymer having a silphenylene skeleton, a polysiloxane skeleton, and a fluorene skeleton in the main chain, and containing an acryloyl group or a methacryloyl group in a side chain.

Such a polymer is preferably a polymer which contains a repeat unit represented by the following formula (A1) and a repeat unit represented by the following formula (A2), and further optionally contains a repeat unit represented by the following formula (A3) and a repeat unit represented by the following formula (A4).

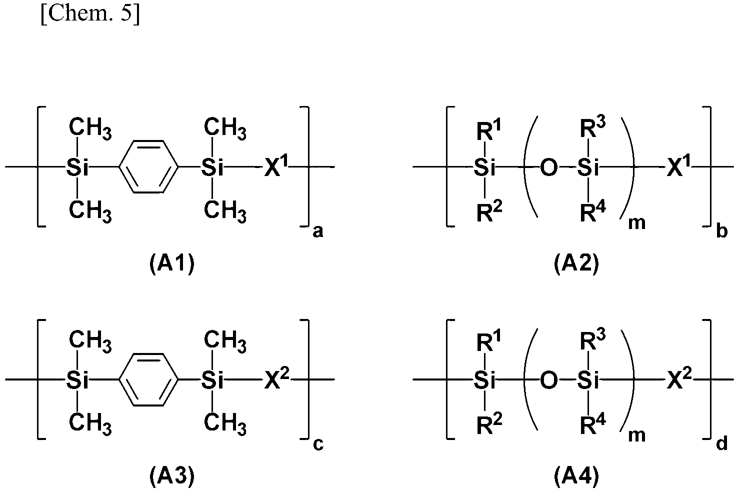

In the formulas (A1) to (A4), a, b, c, and d are numbers satisfying 0 < a < 1, 0 < b < 1, 0 ≤ c < 1, 0 ≤ d < 1, and a+b+c+d = 1, but preferably satisfying 0.1 < a < 0.8, 0.1 < b < 0.8, 0 ≤ c < 0.3, 0 ≤ d < 0.3, and a+b+c+d = 1, and more preferably satisfying 0.35 < a < 0.75, 0.35 < b < 0.75, 0 ≤ c < 0.15, 0 ≤ d < 0.15, and a+b+c+d = 1.

In the formulas (A2) and (A4), R¹ to R⁴ are each independently a hydrocarbyl group having 1 to 20 carbon atoms and optionally containing a hetero atom. Reference symbols m are each independently an integer of 1 to 600, and preferably an integer of 8 to 100. When m is an integer of 2 or more, R³s may be mutually the same or different, and R⁴s may be mutually the same or different.

In the formulas (A2) and (A4), if two or more siloxane units are present (that is, if m is an integer of 2 or more), all of the siloxane units may be the same or two or more different siloxane units may be contained. When two or more different siloxane units are contained, the siloxane units may be randomly or alternately connected, or a plurality of blocks of the same-type siloxane units may be contained.

In the formulas (A1) and (A2), X¹ is a divalent group represented by the following formula (X1). The divalent group represented by the following formula (X1) is a group having a fluorene skeleton. 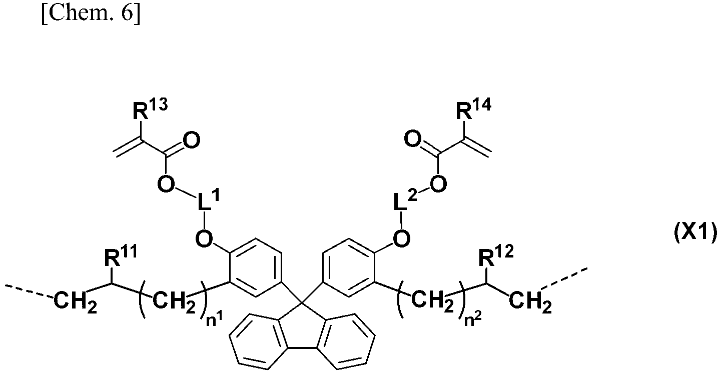 wherein the broken line represents a bond.

In the formula (X1), n¹ and n² are each independently an integer of 1 to 7, and preferably 1.

In the formula (X1), R¹¹ to R¹⁴ are each independently a hydrogen atom or a methyl group, but R¹¹ and R¹² are each preferably a hydrogen atom.

In the formula (X1), L¹ and L² are each independently a saturated hydrocarbylene group having 1 to 15 carbon atoms; a part of -CH₂- of the saturated hydrocarbylene group may be substituted with -O-, -S-, -SO₂-, -CO- or -CONH-; and some or all of the hydrogen atoms of the saturated hydrocarbylene group may be substituted with hydroxy groups. Note that the -CH₂- of the saturated hydrocarbylene group may be positioned at a terminal thereof.

The saturated hydrocarbylene group may be linear, branched, or cyclic. Examples of the saturated hydrocarbylene group include alkanediyl groups having 1 to 15 carbon atoms, such as a methanediyl group, an ethane-1,1-diyl group, an ethane-1,2-diyl group, a propane-1,3-diyl group, a butane-1,4-diyl group, a pentane-1,5-diyl group, a hexane-1,6-diyl group, a heptane-1,7-diyl group, an octane-1,8-diyl group, a nonane-1,9-diyl group, a decane-1,10-diyl group, an undecane-1,11-diyl group, a dodecane-1,12-diyl group, a tridecane-1,13-diyl group, a tetradecane-1,14-diyl group, and a pentadecane-1,15-diyl group; and cyclic saturated hydrocarbylene groups having 3 to 15 carbon atoms, such as a cyclopentanediyl group, a cyclohexanediyl group, a norbornanediyl group, and an adamantanediyl group.

L¹ and L² each preferably have 1 to 8 carbon atoms, and more preferably have at least one hydrogen atom substituted with a hydroxy group, or have at least one -CH₂-substituted with -CONH-.

In the formulas (A3) and (A4), X² is a divalent group represented by the following formula (X2). 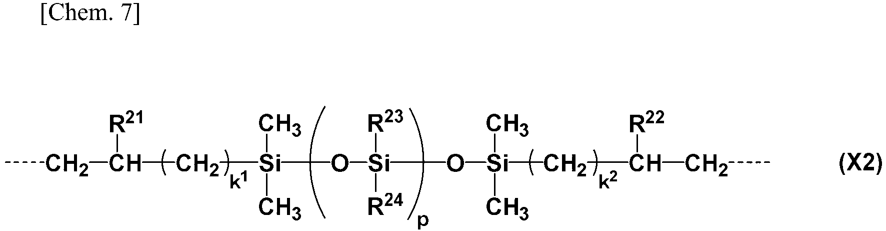 wherein the broken line represents a bond.

In the formula (X2), R²¹ and R²² are each independently a hydrogen atom or a methyl group, and preferably a hydrogen atom.

In the formula (X2), R²³ and R²⁴ are each independently a hydrocarbyl group having 1 to 8 carbon atoms.

In the formula (X2), k¹ and k² are each independently an integer of 0 to 7, and preferably 0.

In the formula (X2), p represents an integer of 0 to 600, preferably an integer of 0 to 100, and more preferably an integer of 0 to 30. When p is an integer of 2 or more, R²³s may be mutually the same or different, and R²⁴s may be mutually the same or different.

The fluorene skeleton-containing polymer of the present invention preferably has a weight average molecular weight (Mw) of 2,000 to 500,000, and more preferably, 4,000 to 100,000. When the Mw falls within the above range, a polymer can be obtained in solid form, and also film formability can be ensured. In the present invention, Mw is expressed as a polystyrene-equivalent measurement value obtained by gel permeation chromatography (GPC) using tetrahydrofuran (THF) as an elution solvent.

The fluorene skeleton-containing polymer of the present invention may be one in which the repeat unit represented by the formula (A1), the repeat unit represented by the formula (A2), the repeat unit represented by the formula (A3) and the repeat unit represented by the formula (A4) are randomly or alternately connected, or may contain a plurality of blocks of each unit.

### [Method for Producing Fluorene Skeleton-containing Polymer]

Although the method for producing the fluorene skeleton-containing polymer is not particularly limited, the polymer can be produced, for example, by addition polymerization of a compound represented by the following formula (1), a compound represented by the following formula (2), a compound represented by the following formula (3), and optionally a compound represented by the following formula (4), in the presence of a metal catalyst. 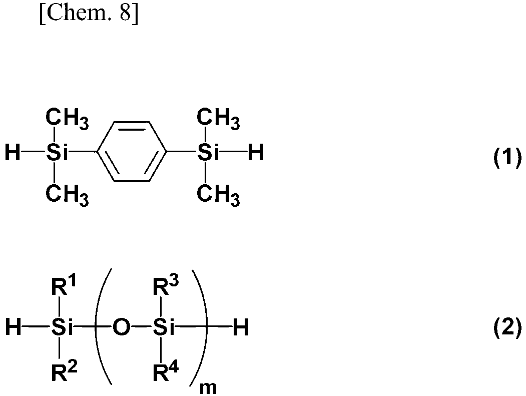 wherein R¹ to R⁴ and m are the same as defined above. 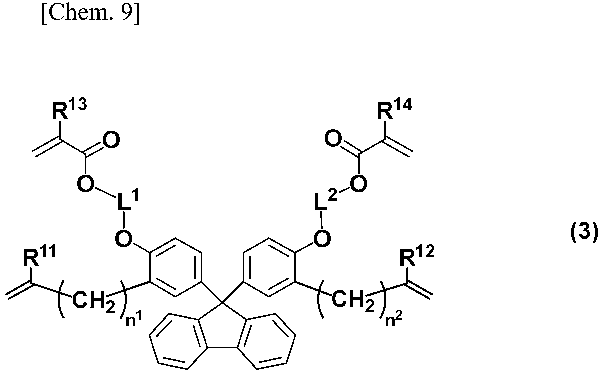 wherein R¹¹ to R¹⁴, n¹, n², L¹, and L² are the same as defined above. 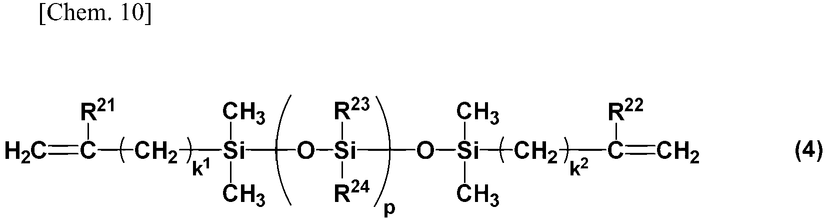 wherein R²¹ to R²⁴, k¹, k² and p are the same as defined above.

Examples of the metal catalyst that can be used include a platinum-group metal such as platinum (including platinum black), rhodium, and palladium; platinum chloride such as H₂PtCl₄·xH₂O, H₂PtCl₆·xH₂O, NaHPtCl₆·xH₂O, KHPtCl₆·xH₂O, Na₂PtCl₆·xH₂O, K₂PtCl₄·xH₂O, PtCl₄·xH₂O, PtCl₂, and Na₂HPtCl₄·xH₂O wherein x is preferably an integer of 0 to 6, and particularly preferably 0 or 6; chloroplatinic acid, and chloroplatinate; an alcohol-modified chloroplatinic acid (for example, those disclosed in U.S. Patent No. 3,220,972); a complex of chloroplatinic acid and olefin (for example, those disclosed in US patent No. 3,159,601, US patent No. 3,159,662, and US patent No. 3,775,452); a platinum-group metal such as platinum black or palladium supported on a carrier such as alumina, silica, or carbon; a rhodium-olefin complex; chlorotris(triphenylphosphine)rhodium (so-called Wilkinson catalyst); and a complex of platinum chloride, chloroplatinic acid or chloroplatinate with a vinyl group-containing siloxane (in particular, vinyl group-containing cyclosiloxane).

The use amount of a catalyst is a catalytic amount. The amount of a platinum-group metal as a catalyst is usually preferably 0.001 to 0.1 wt% relative to the total amount of the reaction polymers. In the polymerization reaction, a solvent may be used as necessary. As the solvent, for example, a hydrocarbon solvent such as toluene or xylene is preferable. As the polymerization conditions, in consideration that the catalyst is not deactivated and polymerization can be completed in a short time, the polymerization temperature is preferably, for example, 40 to 150°C, and particularly preferably 60 to 120°C. The polymerization time varies depending on the type and amount of polymer. In order to prevent intervention of moisture in a polymerization system, the polymerization time is preferably about 0.5 to 100 hours, and particularly preferably 0.5 to 30 hours, After completion of the polymerization reaction the solvent, if used, is distilled away to obtain the polymer.

Although the reaction method is not particularly limited, it is preferable to employ a method of first mixing a compound represented by the formula (2), a compound represented by the formula (3), and optionally a compound represented by the formula (4) followed by heating, adding a metal catalyst to the mixture solution, and then adding a compound represented by the formula (1) dropwise over 0.1 to 5 hours.

Individual raw-material compounds are blended such that the molar ratio of the total of the hydrosilyl groups of the compound represented by the formula (1) and the compound represented by the formula (2) relative to the total of the alkenyl groups of the compound represented by the formula (3) and the compound represented by the formula (4) is preferably 0.67 to 1.67, and more preferably 0.83 to 1.25. The Mw of the polymer of the present invention can be controlled by using a monoallyl compound such as o-allylphenol, or monohydrosilane such as triethylhydrosilane or monohydrosiloxane as a molecular weight modifier.

In the polymerization reaction, a polymerization inhibitor may be optionally used. Examples of the polymerization inhibitor that can be used include various phenols, hydroquinones, benzoquinones, catechols, hydroxylamines, and nitroso compounds. The use amount of the polymerization inhibitor is not particularly limited, but is preferably 0.001 to 10 wt%, and more preferably 0.01 to 5 wt% relative to the compound represented by the formula (3).

After completion of the reaction, a solvent is optionally added, washing is performed with water. Thereafter, the organic layer is heated under reduced pressure to distil away the solvent. In this manner, the fluorene skeleton-containing polymer of the present invention can be obtained. At the time of washing with water, an aqueous solution of a metal hydroxide such as sodium hydroxide or potassium hydroxide, a metal carbonate or a metal hydrogen carbonate such as sodium carbonate, sodium hydrogen carbonate, or potassium carbonate, may be optionally used.

Another method for producing a fluorene skeleton-containing polymer of the present invention includes a reaction between a polymer (hereinafter, also referred to as polymer B) which contains a repeat unit represented by the following formula (B1) and a repeat unit represented by the following formula (B2) and optionally contains a repeat unit represented by the following formula (B3) and a repeat unit represented by the following formula (B4), with a compound represented by the following formula (5). 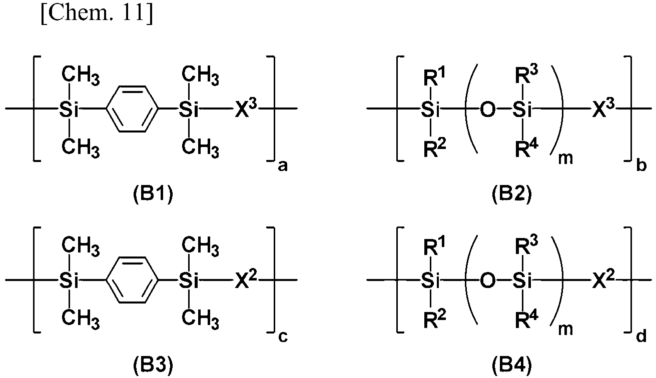 wherein R¹ to R⁴, m, a, b, c, d and X² are the same as defined above.

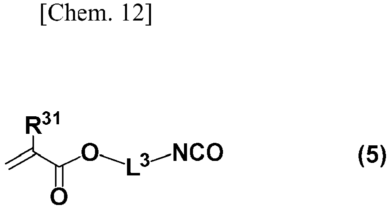

In the formulas (B1) and (B2), X³ is a divalent group represented by the following formula (X3). The divalent group represented by the following formula (X3) is a group having a fluorene skeleton. 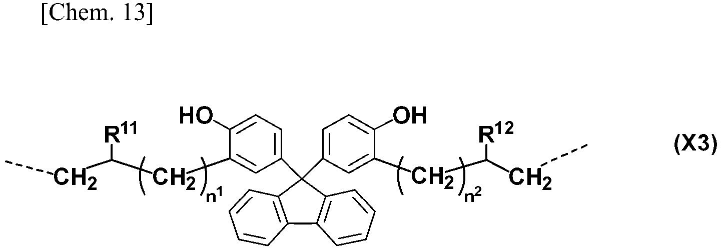 wherein R¹¹, R¹², n¹ and n² are the same as defined above; and the broken line represents a bond.

In the formula (5), R³¹ is a hydrogen atom or a methyl group.

In the formula (5), L³ represents a saturated hydrocarbylene group having 1 to 14 carbon atoms; a part of -CH₂- of the saturated hydrocarbylene group may be substituted with -O-, -S-, -SO₂-, -CO- or -CONH-; and some or all of the hydrogen atoms of the saturated hydrocarbylene group may be substituted with hydroxy groups. The saturated hydrocarbylene group represented by L³ may be linear, branched, or cyclic, but the number of carbon atoms is preferably 1 to 7.

Examples of the compound represented by the formula (5) include, but are not limited to, 2-acryloyloxyethyl isocyanate (Karenz AOI (registered trademark) manufactured by Showa Denko K.K.), 2-methacryloyloxyethyl isocyanate (Karenz MOI (registered trademark) manufactured by Showa Denko K.K.), and 2-(2-methacryloyloxyethyloxy)ethyl isocyanate (Karenz MOI-EG (registered trademark) manufactured by Showa Denko K.K.).

Although the reaction conditions are not particularly limited, usually, polymer B and a compound represented by the formula (5) may be mixed in a solvent and heated. As the solvent, in view of suppressing side reactions while promoting the reaction, it is preferable to use an aprotic polar solvent, and particularly preferable to use a ketone such as cyclopentanone and cyclohexanone; a cyclic ether such as tetrahydrofuran and 1,4-dioxane; and an ester such as ethyl acetate and propylene glycol monomethyl ether acetate. The reaction temperature, in view of preventing side reactions and enabling completion of the reaction in a short time, is preferably, for example, 35 to 130°C, and particularly preferably 45 to 100°C. The reaction time varies depending on the type and amount of reactive substrate, but is preferably about 0.5 to 50 hours, and particularly preferably 0.5 to 24 hours.

In the reaction, individual raw-material compounds are blended such that the molar ratio of a compound represented by the formula (5) relative to X³ in polymer B is preferably 1.80 to 2.20, and more preferably 1.95 to 2.10. As the compound represented by the formula (5), a single type of compound may be used alone, or two or more types of compounds may be used in combination.

In the reaction, a catalyst may be optionally used. Examples of the catalyst include amines such as triethylamine, triethylenediamine, bis-(2-dimethylaminoethyl) ether, and N-methylmorpholine; phosphines such as triphenylphosphine and tri(o-tolyl)phosphine; quaternary ammonium salts such as tetrabutylammonium chloride, benzyltriethylammonium chloride, and tetraethylhydroxylammonium; imidazoles such as imidazole and 2-ethyl-4-methylimidazole; pyridines such as pyridine, N,N-dimethyl-4-aminopyridine, and 2,6-lutidine; organotin compounds such as tin acetate, tin octylate, tin oleate, tin laurate, dibutyltin diacetate, dimethyltin dilaurate, dibutyltin dilaurate, dibutyltin dimercaptide, dibutyltin maleate, dibutyltin dilaurate (dibutyltin (IV) dilaurate), dibutyltin dineodecanoate, dioctyltin dimercaptide, dioctyltin dilaurate, and dibutyltin dichloride; organic lead compounds such as lead octanoate and lead naphthenate; organonickel compounds such as nickel naphthenate; organic cobalt compounds such as cobalt naphthenate; organic copper compounds such as copper octanoate; organic bismuth compounds such as bismuth octylate and bismuth neodecanoate; and potassium salts such as potassium carbonate, potassium acetate, and potassium octylate.

The use amount of the catalyst is usually a catalytic amount, and preferably 0.1 to 20 mol% relative to X³ in polymer B. The catalysts may be used singly or two or more types of catalysts may be used in combination.

In the reaction, a polymerization inhibitor may be optionally used. Examples of the polymerization inhibitor that can be used include various phenols, hydroquinones, benzoquinones, catechols, hydroxylamines, and nitroso compounds. The use amount of the polymerization inhibitor is not particularly limited, but is preferably 0.001 to 10 wt%, and more preferably 0.01 to 5 wt% relative to the compound represented by the formula (3).

After completion of the reaction, a solvent is optionally added, washing is performed with water. Thereafter, the organic layer is heated under reduced pressure to distil away the solvent. In this manner, the fluorene skeleton-containing polymer of the present invention can be obtained. At the time of washing with water, an aqueous solution of a metal hydroxide such as sodium hydroxide or potassium hydroxide, a metal carbonate or a metal hydrogen carbonate such as sodium carbonate, sodium hydrogen carbonate, or potassium carbonate, may be optionally used.

Furthermore, another method for producing a fluorene skeleton-containing polymer of the present invention includes a reaction between polymer B and a compound represented by the following formula (6).

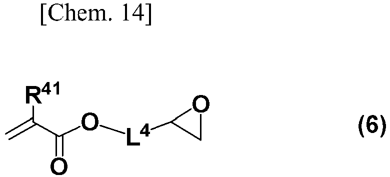

In the formula (6), R⁴¹ is a hydrogen atom or a methyl group.

In the formula (6), L⁴ represents a divalent saturated hydrocarbylene group having 1 to 13 carbon atoms; a part of -CH₂- of the saturated hydrocarbylene group may be substituted with -O-, -S-, -SO₂-, -CO- or -CONH-; and some or all of the hydrogen atoms of the saturated hydrocarbylene group may be substituted with hydroxy groups. The saturated hydrocarbylene group represented by L³ may be linear, branched, or cyclic, but the number of carbon atoms is preferably 1 to 6.

The reaction conditions are not particularly limited, but usually, polymer B and a compound represented by the formula (6) may be mixed in a solvent and heated. As the solvent, in view of suppressing side reactions while promoting the reaction, it is preferable to use an aprotic polar solvent and particularly preferable to use a ketone such as cyclopentanone and cyclohexanone; a cyclic ether such as tetrahydrofuran and 1,4-dioxane; and an ester such as ethyl acetate and propylene glycol monomethyl ether acetate. The reaction temperature, in view of preventing side reactions and enabling completion of the reaction in a short time, is preferably, for example, 35 to 130°C, and particularly preferably 45 to 100°C. The reaction time varies depending on the type and amount of reactive substrate, but is preferably about 0.5 to 50 hours, and particularly preferably 0.5 to 24 hours.

In the reaction, individual raw-material compounds are blended such that the molar ratio of a compound represented by the formula (6) relative to X³ in polymer B is preferably 1.60 to 3.00, and more preferably 1.90 to 2.00. As the compound represented by the formula (6), a single type of compound may be used alone, or two or more types of compounds may be used in combination.

In the reaction, a catalyst may be optionally used. Examples of the catalyst include amines such as triethylamine, triethylenediamine, bis-(2-dimethylaminoethyl) ether, and N-methylmorpholine; phosphines such as triphenylphosphine and tri(o-tolyl)phosphine; quaternary ammonium salts such as tetrabutylammonium chloride, benzyltriethylammonium chloride, and tetraethylhydroxylammonium; imidazoles such as imidazole and 2-ethyl-4-methylimidazole; potassium salts such as potassium hydroxide, potassium carbonate, potassium acetate, and potassium octylate; and sodium salts such as sodium hydroxide, sodium carbonate, sodium acetate, and sodium octylate.

The use amount of the catalyst is usually a catalytic amount, and preferably 0.1 to 20 mol% relative to X³ in polymer B. The catalysts may be used singly or two or more types of catalysts may be used in combination.

In the reaction, a polymerization inhibitor may be optionally used. Examples of the polymerization inhibitor that can be used include various phenols, hydroquinones, benzoquinones, catechols, hydroxylamines, and nitroso compounds. The amount of the polymerization inhibitor to be used is not particularly limited, but is preferably 0.001 to 10 wt%, and more preferably 0.01 to 5 wt% relative to the compound represented by the formula (6).

After completion of the reaction, a solvent is optionally added, washing is performed with water. Thereafter, the organic layer is heated under reduced pressure to distil away the solvent. In this manner, the polymer of the present invention can be obtained. At the time of washing with water, an aqueous solution of a metal hydroxide such as sodium hydroxide or potassium hydroxide, a metal carbonate or a metal hydrogen carbonate such as sodium carbonate, sodium hydrogen carbonate, or potassium carbonate, may be optionally used.

Another method for producing a polymer of the present invention includes a reaction of a polymer (hereinafter, also referred to as polymer C) which contains a repeat unit represented by the following formula (C1) and a repeat unit represented by the following formula (C2) and optionally contains a repeat unit represented by the following formula (C3) and a repeat unit represented by the following formula (C4) with acrylic acid or methacrylic acid. 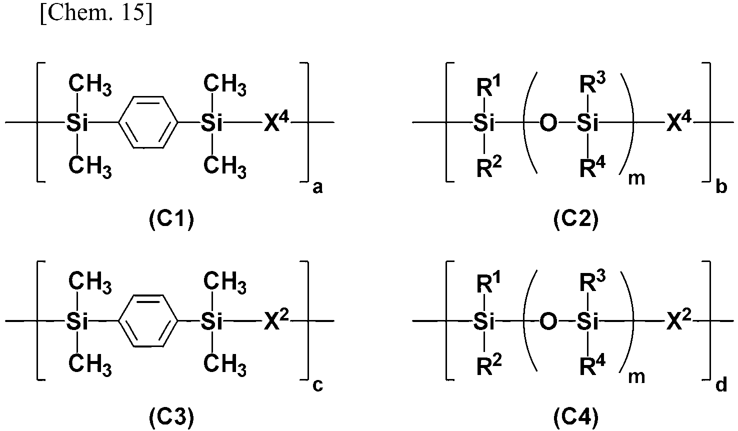 wherein R¹ to R⁴, m, a, b, c, d and X² are the same as defined above.

In the formulas (C1) and (C2), X⁴ is a divalent group represented by the following formula (X4). The divalent group represented by the following formula (X4) is a group having a fluorene skeleton. 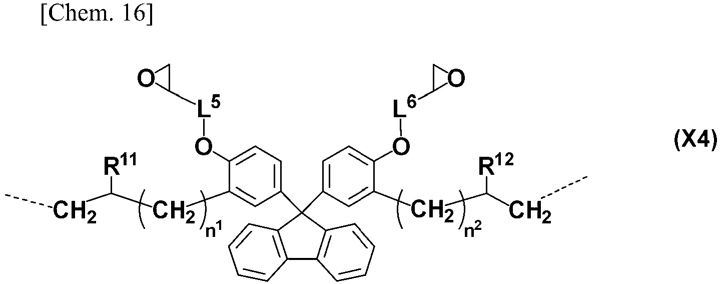 wherein R¹¹, R¹², n¹ and n² are the same as defined above; and the broken line represents a bond.

In the formula (X4), L⁵ and L⁶ are each independently a saturated hydrocarbylene group having 1 to 13 carbon atoms; a part of -CH₂- of the saturated hydrocarbylene group may be substituted with -O-, -S-, -SO₂-, -CO- or -CONH-; and some or all of the hydrogen atoms of the saturated hydrocarbylene group may be substituted with hydroxy groups. The saturated hydrocarbylene group represented by each of L⁵ and L⁶ may be linear, branched, or cyclic, but the number of carbon atoms is preferably 1 to 6.

The reaction conditions are not particularly limited, but usually, polymer C and acrylic acid or methacrylic acid may be mixed in a solvent and heated. As the solvent, in view of promoting a reaction, it is preferable to use a polar solvent, and particularly preferable to use an alcohol solvent such as propylene glycol monomethyl ether. The reaction temperature, in view of preventing side reactions and enabling completion of the reaction in a short time, is preferably, for example, 35 to 130°C, particularly preferably 60 to 110°C. The reaction time varies depending on the type and amount of reactive substrate, but is preferably about 0.5 to 50 hours, and particularly preferably 0.5 to 24 hours.

In the reaction, individual raw-material compounds are blended such that the molar ratio of acrylic acid or methacrylic acid relative to X⁴ in polymer C is preferably 2.00 to 10.00 and more preferably 3.00 to 8.00. Either one of acrylic acid and methacrylic acid may be used singly, or both of them may be used in combination.

In the reaction, a catalyst may be optionally used. Examples of the catalyst include amines such as triethylamine, triethylenediamine, bis-(2-dimethylaminoethyl) ether, and N-methylmorpholine; phosphines such as triphenylphosphine and tri(o-tolyl)phosphine; quaternary ammonium salts such as tetrabutylammonium chloride, benzyltriethylammonium chloride, and tetraethylhydroxylammonium; and imidazoles such as imidazole and 2-ethyl-4-methylimidazole.

The amount of the catalyst to be used is usually a catalytic amount, and preferably 0.1 to 20 mol% relative to X⁴ in polymer C. The catalysts may be used singly or two or more types of catalysts may be used in combination.

In the reaction, a polymerization inhibitor may be optionally used. Examples of the polymerization inhibitor that can be used include various phenols, hydroquinones, benzoquinones, catechols, hydroxylamines, and nitroso compounds. The amount of the polymerization inhibitor to be used is not particularly limited, but is preferably 0.001 to 10 wt%, and more preferably 0.01 to 5 wt% relative to acrylic acid or methacrylic acid.

After completion of the reaction, a solvent is optionally added, washing is performed with water. Thereafter, the organic layer is heated under reduced pressure to distil away the solvent. In this manner, the polymer of the present invention can be obtained. At the time of washing with water, an aqueous solution of a metal hydroxide such as sodium hydroxide or potassium hydroxide, a metal carbonate or a metal hydrogen carbonate such as sodium carbonate, sodium hydrogen carbonate, or potassium carbonate, may be optionally used.

When a composition containing the polymer of the present invention and a curing agent is prepared and applied onto a substrate followed by heating, a cured film excellent in adhesion performance can be obtained.

As the curing agent, e.g., an amine curing agent and a thiol curing agent can be used, but an amine curing agent is particularly preferably used.

Examples of the amine curing agent include aliphatic amines such as tetramethylenediamine, hexamethylenediamine, diethylenetriamine, and triethylenetetramine; alicyclic amines such as isophoronediamine and bis(4-amino-3-methylcyclohexyl)methane; aromatic amines such as diaminodiphenylmethane, diaminodiphenylsulfone, and metaphenylenediamine; heterocyclic amines such as aminoethylpiperazine and 3,9-bis(3-aminopropyl)-2,4, 8,10-tetraoxaspiro[5.5]undecane; dicyandiamide; and modified ones of these.

Examples of the thiol curing agent include alkylpolythiol compounds such as 1,4-butanedithiol, 1,6-hexanedithiol, and 1,10-decanedithiol; and terminal mercapto group-containing ester compounds such as tetraethylene glycol bis(3-mercaptopropionate), trimethylolpropane tris(3-mercaptopropionate), tris[(3-mercaptopropionyloxy)ethyl] isocyanurate, pentaerythritol tetrakis(3-mercaptopropionate), dipentaerythritol hexakis(3-mercaptopropionate), 1,4-bis(3-mercaptobutyryloxy) butane, pentaerythritol tetrakis(3-mercaptobutyrate), trimethylolpropane tris(3-mercaptobutyrate), and trimethylolethane tris(3-mercaptobutyrate).

The content of the curing agent in the composition is preferably 5 to 50 parts by weight, and more preferably 5 to 45 parts by weight per 100 parts by weight of the polymer of the present invention. The curing agents may be used singly, or two or more types of curing agents may be used in combination.

The composition may contain a solvent as necessary. Examples of the solvent include ketones such as cyclohexanone, cyclopentanone, and methyl-2-n-pentyl ketone; alcohols such as 3-methoxybutanol, 3-methyl-3-methoxybutanol, 1-methoxy-2-propanol, and 1-ethoxy-2-propanol; ethers such as propylene glycol monomethyl ether, ethylene glycol monomethyl ether, propylene glycol monoethyl ether, ethylene glycol monoethyl ether, propylene glycol dimethyl ether and diethylene glycol dimethyl ether; and esters such as propylene glycol monomethyl ether acetate, propylene glycol monoethyl ether acetate, ethyl lactate, ethyl pyruvate, butyl acetate, methyl 3-methoxypropionate, ethyl 3-ethoxypropionate, tert-butyl acetate, tert-butyl propionate, propylene glycol mono-tert-butyl ether acetate, and γ-butyrolactone. These may be used singly or two or more types thereof may be used in combination. The content of the solvent in the composition is preferably 50 to 2000 parts by weight, more preferably 50 to 1000 parts by weight, and still more preferably 50 to 100 parts by weight per 100 parts by weight of the polymer of the present invention. The solvents may be used singly or two or more types thereof may be used in combination.

The composition can be applied to the substrate by a method commonly known in the technical field. Examples of the method that can be used include a dip method, a spin coating method, and a roll coating method. The coating amount can be appropriately selected according to the purpose, but is preferably an amount sufficient to provide a film thickness of 0.1 to 100 µm.

When the applied resin composition is cured by heating, a film excellent in adhesion performance can be obtained. The heating condition is appropriately selected according to the type of the fluorene skeleton-containing polymer and curing agent to be used, but usually, heating is preferably performed at 50 to 250°C for about 10 minutes to 6 hours.

### EXAMPLES

Hereinafter, the present invention will be specifically described with reference to Examples and Comparative Examples, but the present invention is not limited to the following Examples. In the following Examples, Mw was measured by GPC using TSKGEL Super HZM-H (manufactured by Tosoh Corporation) as a GPC column and monodisperse polystyrene as a standard under the analysis conditions of a flow rate of 0.6 mL/min, an elution solvent THF, and a column temperature of 40°C.

The compounds used for the synthesis of polymers are shown below.

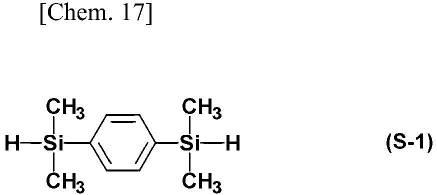

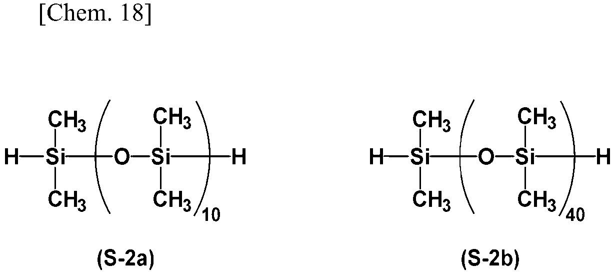

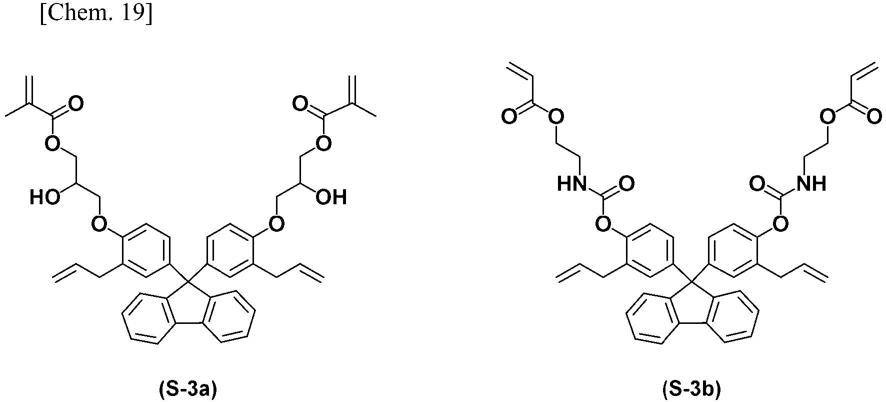

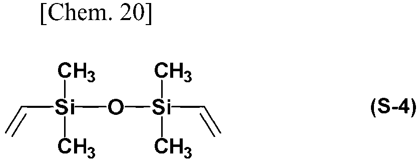

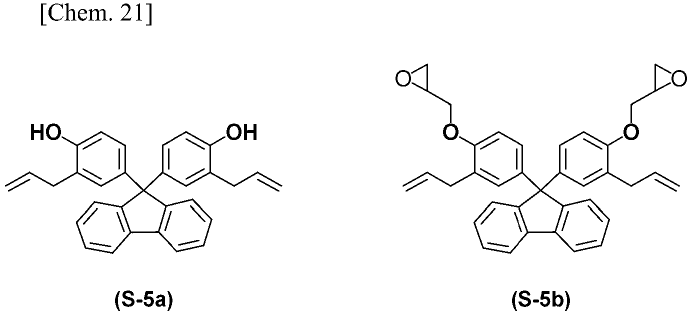

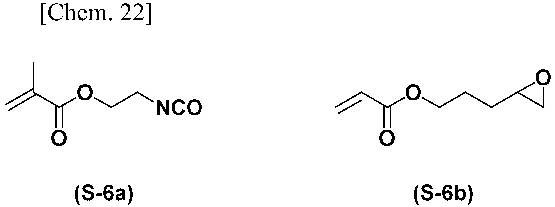

### [Example 1] Synthesis of Polymer 1

To a 10 L-flask equipped with a stirrer, a thermometer, a nitrogen purging system, and a reflux condenser, 361 g (0.45 mol) of a compound represented by the formula (S-2a) and 715 g (1.00 mol) of a compound represented by the formula (S-3a) were added, and then 1800 g of toluene was added. The mixture was heated to 70°C. Thereafter, 1.5 g of a toluene solution of chloroplatinic acid (platinum concentration: 0.5 wt%) was added, and 105 g (0.54 mol) of a compound represented by the formula (S-1) was added dropwise thereto over one hour (total of hydrosilyl groups: total of alkenyl groups = 0.99: 1 (molar ratio)). After completion of the dropwise addition, the mixture was heated to 100°C and aged for 7 hours. Thereafter, toluene was distilled away from the reaction solution under reduced pressure to obtain Polymer 1. The Mw of Polymer 1 was 12,000. Note that, it was confirmed by ¹H-NMR (manufactured by Bruker Corporation) that Polymer 1 is a polymer containing the repeat unit represented by the formula (A1) and the repeat unit represented by the formula (A2).

### [Example 2] Synthesis of Polymer 2

To a 10 L-flask equipped with a stirrer, a thermometer, a nitrogen purging system, and a reflux condenser, 1513 g (0.50 mol) of a compound represented by the formula (S-2b), 606 g (0.85 mol) of a compound represented by the formula (S-3b), and 28.0 g (0.15 mol) of a compound represented by the formula (S-4) were added, and then 3,000 g of toluene was added. The mixture was heated to 80°C. Thereafter, 2.5 g of a toluene solution of chloroplatinic acid (platinum concentration: 0.5 wt%) was added, and 95.3 g (0.49 mol) of a compound represented by the formula (S-1) was added dropwise thereto over one hour (total of hydrosilyl groups: total of alkenyl groups = 0.99:1 (molar ratio)). After completion of the dropwise addition, the mixture was heated to 105°C and aged for 10 hours. Thereafter, toluene was distilled away from the reaction solution under reduced pressure to obtain Polymer 2. The Mw of Polymer 2 was 18,000. Note that, it was confirmed by ¹H-NMR (manufactured by Bruker Corporation) that Polymer 2 is a polymer containing the repeat unit represented by the formula (A1), the repeat unit represented by the formula (A2), the repeat unit represented by the formula (A3), and the repeat unit represented by the formula (A4).

### [Example 3] Synthesis of Polymer 3

In a 10 L-flask equipped with a stirrer, a thermometer, a nitrogen purging system, and a reflux condenser, 908 g (0.30 mol) of a compound represented by the formula (S-2b), 387 g (0.90 mol) of a compound represented by the formula (S-5a), and 18.6 g (0.10 mol) of a compound represented by the formula (S-4) were added, and then 2,100 g of toluene was added. The mixture was heated to 70°C. Thereafter, 1.0 g of a toluene solution of chloroplatinic acid (platinum concentration: 0.5 wt%) was added, and 134 g (0.69 mol) of a compound represented by the formula (S-1) was added dropwise thereto over one hour (total of hydrosilyl groups: total of alkenyl groups = 0.99:1 (molar ratio)). After completion of the dropwise addition, the mixture was heated to 90°C and aged for 11 hours. Thereafter, toluene was distilled away from the reaction solution under reduced pressure to obtain a polymer. To this polymer, 2,500 g of propylene glycol monomethyl ether acetate was added. After confirming that the polymer was dissolved, 279 g (1.80 mol) of a compound represented by the formula (S-6a) and 5.06 g (0.05 mol) of triethylamine were added to the resulting solution, which was heated at 50°C for 12 hours. After completion of the reaction, propylene glycol monomethyl ether acetate and triethylamine were distilled away from the reaction solution under reduced pressure to obtain Polymer 3. The Mw of Polymer 3 was 14,000. Note that it was confirmed by ¹H-NMR (manufactured by Bruker Corporation) that Polymer 3 is a polymer containing the repeat unit represented by the formula (A1), the repeat unit represented by the formula (A2), the repeat unit represented by the formula (A3), and the repeat unit represented by the formula (A4).

### [Example 4] Synthesis of Polymer 4

To a 10-L flask equipped with a stirrer, a thermometer, a nitrogen purging system, and a reflux condenser, 401 g (0.50 mol) of a compound represented by the formula (S-2a) and 431 g (1.00 mol) of a compound represented by the formula (S-5a) were added and then 1,900 g of toluene was added. The mixture was heated to 80°C. Thereafter, 1.4 g of a toluene solution of chloroplatinic acid (platinum concentration: 0.5 wt%) was added, and 95.3 g (0.49 mol) of a compound represented by the formula (S-1) was added dropwise thereto over one hour (total of hydrosilyl groups: total of alkenyl groups = 0.99: 1 (molar ratio)). After completion of the dropwise addition, the mixture was heated to 100°C and aged for 12 hours. Thereafter, toluene was distilled away from the reaction solution under reduced pressure to obtain a polymer. To this polymer, 1,800 g of propylene glycol monomethyl ether acetate was added. After confirming that the polymer was dissolved, 312 g (2.00 mol) of a compound represented by the formula (S-6b) and 10.1 g (0.10 mol) of triethylamine were added to the resulting solution, which was heated at 70°C for 10 hours. After completion of the reaction, propylene glycol monomethyl ether acetate and triethylamine were distilled away from the reaction solution under reduced pressure to obtain Polymer 4. The Mw of Polymer 4 was 13,000. Note that it was confirmed by ¹H-NMR (manufactured by Bruker Corporation) that Polymer 4 is a polymer containing the repeat unit represented by the formula (A1), the repeat unit represented by the formula (A2), the repeat unit represented by the formula (A3), and the repeat unit represented by the formula (A4).

### [Example 5] Synthesis of Polymer 5

In a 10-L flask equipped with a stirrer, a thermometer, a nitrogen purging system, and a reflux condenser, 321 g (0.40 mol) of a compound represented by the formula (S-2a), 499 g (0.92 mol) of a compound represented by the formula (S-5b), and 14.9 g (0.08 mol) of a compound represented by the formula (S-4) were added, and then 700 g of toluene was added. The mixture was heated to 90°C. Thereafter, 1.3 g of a toluene solution of chloroplatinic acid (platinum concentration: 0.5 wt%) was added, and 115 g (0.59 mol) of a compound represented by the formula (S-1) was added dropwise thereto over one hour (total of hydrosilyl groups: total of alkenyl groups = 0.99:1 (molar ratio)). After completion of the dropwise addition, the mixture was heated to 100°C and aged for 6 hours. Thereafter, toluene was distilled away from the reaction solution under reduced pressure to obtain a polymer. To this polymer 1000 g of propylene glycol monomethyl ether was added. After confirming that the polymer was dissolved, 475 g (5.52 mol) of methacrylic acid and 24.1 g (0.092 mol) of triphenylphosphine were added to the resulting solution, which was heated at 110°C for 12 hours. After completion of the reaction, propylene glycol monomethyl ether and methacrylic acid were distilled away from the reaction solution under reduced pressure to obtain Polymer 5. The Mw of Polymer 5 was 15,000. Note that it was confirmed by ¹H-NMR (manufactured by Bruker Corporation) that Polymer 5 is a polymer containing the repeat unit represented by the formula (A1), the repeat unit represented by the formula (A2), the repeat unit represented by the formula (A3), and the repeat unit represented by the formula (A4).

### [Comparative Example 1] Synthesis of Comparative Polymer 1

In a 10-L flask equipped with a stirrer, a thermometer, a nitrogen purging system, and a reflux condenser, 401 g (0.50 mol) of a compound represented by the formula (S-2a), 488 g (0.90 mol) of a compound represented by the formula (S-5b), and 18.6 g (0.10 mol) of a compound represented by the formula (S-4) were added, and then 1,100 g of toluene was added. The mixture was heated to 80°C. Thereafter, 1.0 g of a toluene solution of chloroplatinic acid (platinum concentration: 0.5 wt%) was added, and 95.3 g (0.49 mol) of the compound represented by the formula (S-1) was added dropwise thereto over one hour (total of hydrosilyl groups: total of alkenyl groups = 0.99: 1 (molar ratio)). After completion of the dropwise addition, the mixture was heated to 100°C and aged for 6 hours. Thereafter, toluene was distilled away from the reaction solution under reduced pressure to obtain Comparative Polymer 1. The Mw of Comparative Polymer 1 was 12,000.

### [Comparative Example 2] Synthesis of Comparative Polymer 2

In a 10-L flask equipped with a stirrer, a thermometer, a nitrogen purging system, and a reflux condenser, 1,362 g (0.45 mol) of a compound represented by the formula (S-2b), 215 g (0.50 mol) of a compound represented by the formula (S-5a), and 271 g (0.50 mol) of a compound represented by the formula (S-5b) were added, and then 2,100 g of toluene was added. The mixture was heated to 70°C. Thereafter, 2.0 g of a toluene solution of chloroplatinic acid (platinum concentration: 0.5 wt%) was added, and 105 g (0.54 mol) of a compound represented by the formula (S-1) was added dropwise thereto over one hour (total of hydrosilyl groups: total of alkenyl groups = 0.99: 1 (molar ratio)). After completion of the dropwise addition, the mixture was heated to 100°C and aged for 12 hours. Thereafter, toluene was distilled away from the reaction solution under reduced pressure to obtain Comparative Polymer 2. The Mw of Comparative Polymer 2 was 14,000.

### [Adhesion Test]

To 100 parts by weight of each of the Polymer 1 to 5 and the comparative Polymer 1 and 2, 20 parts by weight of JER Cure 113 (manufactured by Mitsubishi Chemical Corporation) as an amine curing agent was added, and 55 parts by weight of cyclopentanone was further added, and then dissolved until a homogeneous state was obtained. Each solution was applied onto a silicon wafer by spin coating, and prebaked at 120°C for 2 minutes to prepare a film (thickness: 30 µm). On each of the obtained films, a silicon wafer diced into 4 mm-square pieces was thermocompressed under conditions of 180°C, 2 MPa, and 600 seconds, and further subjected to post-curing under conditions of 180°C and 4 hours. This sample was subjected to a die-shear test performed under the conditions of a measurement speed of 50.0 µm/sec and a measurement height of 50.0 µm using a bond tester DAGE 4000 PXY manufactured by Nordson DAGE, and adhesion performance was evaluated. Each composition was subjected to measurement 10 times and an average value thereof is shown in Table 1.

**[Table 1]**

| | | Example | | | | | Comparative Example | |
|---|---|---|---|---|---|---|---|---|
| | | 1 | 2 | 3 | 4 | 5 | 1 | 2 |
| Polymer | 1 | 100 | - | - | - | - | - | - |
| | 2 | - | 100 | - | - | - | - | - |
| | 3 | - | - | 100 | - | - | - | - |
| | 4 | - | - | - | 100 | - | - | - |
| | 5 | - | - | - | - | 100 | - | - |
| Comparative polymer | 1 | - | - | - | - | - | 100 | - |
| | 2 | - | - | - | - | - | - | 100 |
| JER Cure 113 | | 20 | 20 | 20 | 20 | 20 | 20 | 20 |
| Cyclopentanone | | 55 | 55 | 55 | 55 | 55 | 55 | 55 |
| Adhesion force (MPa) | | 5.7 | 4.9 | 5.5 | 5.2 | 5.7 | 1.5 | 1.1 |

From the above results, it was found that the films obtained from the polymers of the present invention are excellent in adhesion performance.

## Claims

1. A polymer having a silphenylene skeleton, a polysiloxane skeleton, and a fluorene skeleton in a main chain, and comprising an acryloyl group or a methacryloyl group in a side chain.

2. The polymer according to claim 1, comprising a repeat unit having the following formula (A1) and a repeat unit having the following formula (A2), and further optionally comprising a repeat unit having the following formula (A3) and a repeat unit having the following formula (A4): 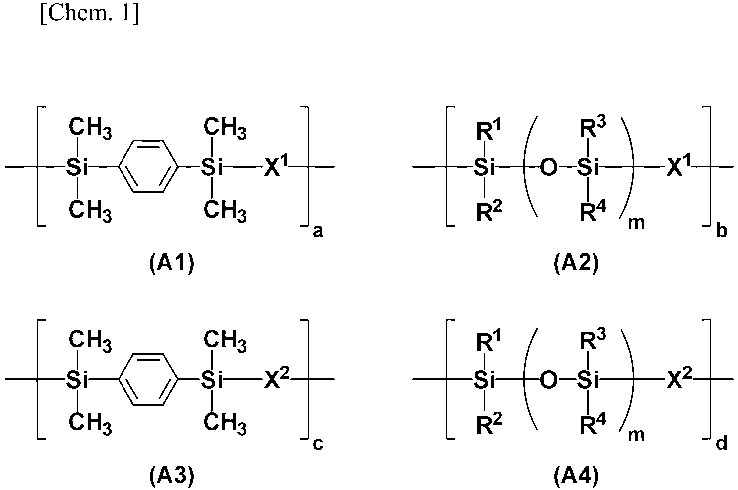 wherein R¹ to R⁴ are each independently a hydrocarbyl group having 1 to 20 carbon atoms optionally containing a heteroatom; m is each independently an integer of 1 to 600; when m is an integer of 2 or more, R³s are mutually the same or different, and R⁴s are mutually the same or different; a, b, c, and d are numbers satisfying 0 < a < 1, 0 < b < 1, 0 ≤ c < 1, 0 ≤ d < 1, and a+b+c+d = 1; X¹ is a divalent group represented by the following formula (X1); and X² is a divalent group represented by the following formula (X2), 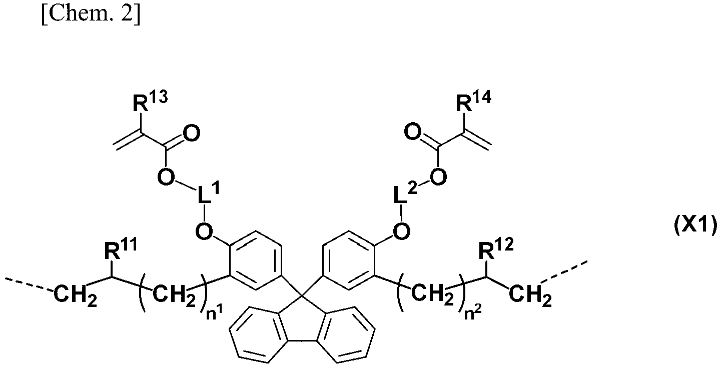 wherein n¹ and n² are each independently an integer of 1 to 7; R¹¹ to R¹⁴ are each independently a hydrogen atom or a methyl group; L¹ and L² are each independently a saturated hydrocarbylene group having 1 to 15 carbon atoms; a part of -CH₂- of the saturated hydrocarbylene group may be substituted with -O-, -S-, -SO₂-, -CO-, or -CONH-; and some or all of the hydrogen atoms of the saturated hydrocarbylene group may be substituted with hydroxy groups; and the broken line represents a bond, 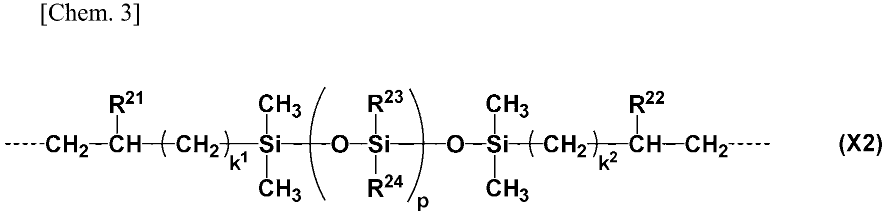 wherein R²¹ and R²² are each independently a hydrogen atom or a methyl group; R²³ and R²⁴ are each independently a hydrocarbyl group having 1 to 8 carbon atoms, k¹ and k² are each independently an integer of 0 to 7; p is an integer of 0 to 600; and the broken line represents a bond.

3. The polymer according to claim 2, wherein L¹ and L² are each a saturated hydrocarbylene group in which at least one hydrogen atom is substituted with a hydroxy group, or a saturated hydrocarbylene group in which at least one -CH₂- is substituted with -CONH-.

4. The polymer according to claim 2 or 3, wherein L¹ and L² each have 1 to 8 carbon atoms.

5. The polymer according to claim 2 or 3, wherein n¹ and n² are each 1.

6. The polymer according to claim 2 or 3, wherein R¹¹ and R¹² are each a hydrogen atom.

7. The polymer according to claim 2 or 3, wherein R²¹ and R²² are each a hydrogen atom.
